# EUROPEAN PATENT APPLICATION

(11) **EP 4 429 312 A1**
(43) Date of publication of application: **11.09.2024**
(21) Application number: 22906438.1
(22) Date of filing: 09.12.2022
(51) Int. Cl.: H04W 24/02

(54) **COMMUNICATION METHOD AND APPARATUS**

(30) Priority: 14.12.2021 CN 202111524548
(71) Applicant: Huawei Technologies Co., Ltd., Shenzhen, Guangdong 518129 (CN)
(72) Inventor: ZENG, Kun, Shenzhen, Guangdong 518129 (CN)
(74) Representative: Körber, Martin Hans
(86) International application number: PCT/CN2022/138081
(87) International publication number: WO 2023/109691

(57) **Abstract**

This application belongs to the field of communication technologies, and provides a communication method and apparatus, to reduce communication interference between devices and improve communication quality. The method includes: A first device determines that a first resource is subject to interference and sends first information. The first device is configured with a resource used to perform a communication function and a sensing function. The first resource is used to perform at least one of the following functions: the communication function or the sensing function. The first information indicates that the first resource is subject to interference.

## Description

This application claims priority to Chinese Patent Application No. 20/111524548.2, filed with the China National Intellectual Property Administration on December 14, 2021 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a new radio (new radio, NR) system, there may be three types of slots: a communication slot (communication slot), a sensing slot (sensing slot), and a guard period (guard period, GP), or referred to as a blank slot (blank slot). The communication slot is usually used by the system to perform a communication operation, to exchange data or signaling. The sensing slot is usually used by the system to perform a sensing operation, for example, position a target. The guard period is usually used to provide necessary slot overheads for the system to switch between the two operations described above.

Currently, a device may flexibly configure a length of a communication slot and a length of a sensing slot based on a requirement of the device, to improve a communication capacity and communication efficiency. However, this configuration mode easily causes communication interference between devices and affects communication quality.

### SUMMARY

Embodiments of this application provide a communication method and apparatus, to reduce communication interference between devices and improve communication quality.

The following technical solutions are used in this application.

According to a first aspect, a communication method is provided. The method includes: A first device determines that a first resource is subject to interference and sends first information. The first device is configured with a resource used to perform a communication function and a sensing function. The first resource is used to perform at least one of the following functions: the communication function or the sensing function. The first information indicates that the first resource is subject to interference.

It can be learned from the method according to the first aspect that, when determining that the first resource is subject to interference, the first device may indicate, based on the first information, that the first resource is subject to interference, so that the resource can be subsequently adjusted based on the first information, to reduce communication interference between devices and improve communication quality.

In a possible design solution, the first information may include at least one of the following items of the first resource: frequency domain information or time domain information. In this way, a device causing interference can determine a time-frequency position of the first resource based on the first information.

Optionally, the frequency domain information may include at least one of the following items of the first resource: a channel identifier or a frequency band identifier. In this way, the device causing interference can flexibly adjust, based on the first information, resource configuration of the device by using different granularities (for example, using a channel as a granularity or using a frequency band as a granularity), or indicate the first device to adjust resource configuration of the first device, to reduce communication interference between devices and improve communication quality.

Optionally, the time domain information may include at least one of the following items of the first resource: a time domain position or a time domain format. In this way, the device causing interference can accurately determine a time domain length of the first resource based on the first information.

In a possible design solution, after the first device sends the first information, the method according to the first aspect may further include: The first device obtains second information. The second information indicates the first device to adjust a time domain position of the first resource, to reduce or avoid overlapping between the first resource and an interference resource in time domain. This effectively reduces communication interference between devices and improves communication quality.

Optionally, that the first device adjusts the time domain position of the first resource may be: The first device reduces a time domain length of the first resource and increases a time domain length of a second resource corresponding to the first resource, to improve resource utilization and improve communication efficiency. The second resource is used to perform at least one of the following functions: a communication function, a sensing function, or a protection function.

Further, the second resource is a resource whose frequency domain position is the same as that of the first resource and whose time domain position is different from that of the first resource.

According to a second aspect, a communication method is provided. The method includes: A second device obtains first information and determines the first information. The first information indicates that a first resource is subject to interference. The first resource is used to perform at least one of the following functions: a communication function or a sensing function.

It can be learned from the method according to the second aspect that, when obtaining the first information, the second device may determine, based on the first information, that the first resource is subject to interference, so that the resource can be subsequently adjusted based on the first information, to reduce communication interference between devices and improve communication quality.

In a possible design solution, the first information may include at least one of the following items of the first resource: frequency domain information or time domain information.

Optionally, the frequency domain information may include at least one of the following items of the first resource: a channel identifier or a frequency band identifier.

Optionally, the time domain information may include at least one of the following items of the first resource: a time domain position or a time domain format.

In a possible design solution, after the second device determines the first information, the method according to the second aspect may further include: The second device sends second information to a first device. The second information indicates the first device to adjust a time domain position of the first resource.

In a possible design solution, after the second device determines the first information, the method according to the second aspect may further include: The second device adjusts a time domain position of a third resource. The second device is configured with the third resource. The third resource is a resource that causes interference to the first resource. In this way, time domain overlapping between the first resource and the third resource can be reduced or avoided. This effectively reduces communication interference between devices and improves communication quality.

Optionally, that the second device adjusts a time domain position of a third resource may be: The second device reduces a time domain length of the third resource and increases a time domain length of a fourth resource corresponding to the third resource, to improve resource utilization and improve communication efficiency. The fourth resource is used to perform at least one of the following functions: a communication function, a sensing function, or a protection function.

Further, the fourth resource is a resource whose frequency domain position is the same as that of the third resource and whose time domain position is different from that of the third resource.

In a possible design solution, after the second device determines the first information, the method according to the second aspect may further include: The second device sends third information to a third device. The third device is configured with a third resource. The third resource is a resource that causes interference to the first resource. The third information indicates the third device to adjust a time domain position of the third resource, to reduce or avoid time domain overlapping between the first resource and the third resource. This effectively reduces communication interference between devices and improves communication quality.

In addition, for another technical effect of the method according to the second aspect, refer to the technical effects of the method according to the first aspect. Details are not described herein again.

According to a third aspect, a communication apparatus is provided. The apparatus includes a processing module and a transceiver module. The processing module is configured to determine that a first resource is subject to interference. The transceiver module is configured to send first information. The apparatus is configured with a resource used to perform a communication function and a sensing function. The first resource is used to perform at least one of the following functions: the communication function or the sensing function. The first information indicates that the first resource is subject to interference.

In a possible design solution, the first information may include at least one of the following items of the first resource: frequency domain information or time domain information.

Optionally, the frequency domain information may include at least one of the following items of the first resource: a channel identifier or a frequency band identifier.

Optionally, the time domain information may include at least one of the following items of the first resource: a time domain position or a time domain format.

In a possible design solution, the transceiver module may be further configured to obtain second information after sending the first information. The second information indicates the apparatus according to the third aspect to adjust a time domain position of the first resource.

Optionally, that the apparatus according to the third aspect adjusts the time domain position of the first resource may be: The apparatus reduces a time domain length of the first resource and increases a time domain length of a second resource corresponding to the first resource. The second resource is used to perform at least one of the following functions: a communication function, a sensing function, or a protection function.

Further, the second resource is a resource whose frequency domain position is the same as that of the first resource and whose time domain position is different from that of the first resource.

Optionally, the transceiver module may alternatively include a sending module and a receiving module. The sending module is configured to implement a sending function of the apparatus according to the third aspect. The receiving module is configured to implement a receiving function of the apparatus according to the third aspect.

Optionally, the apparatus according to the third aspect may further include a storage module. The storage module stores a program or instructions. When the processing module executes the program or the instructions, the apparatus is enabled to perform the method according to the first aspect.

It should be noted that the apparatus according to the third aspect may be a terminal or a network device, or may be a chip (system) or another part or component that may be disposed in a terminal or a network device, or may be an apparatus that includes a terminal or a network device. This is not limited in this application.

In addition, for technical effects of the apparatus according to the third aspect, refer to the technical effects of the method according to the first aspect. Details are not described herein again.

According to a fourth aspect, a communication apparatus is provided. The apparatus includes a processing module and a transceiver module. The transceiver module is configured to obtain first information. The processing module is configured to determine the first information. The first information indicates that a first resource is subject to interference. The first resource is used to perform at least one of the following functions: a communication function or a sensing function.

In a possible design solution, the first information may include at least one of the following items of the first resource: frequency domain information or time domain information.

Optionally, the frequency domain information may include at least one of the following items of the first resource: a channel identifier or a frequency band identifier.

Optionally, the time domain information may include at least one of the following items of the first resource: a time domain position or a time domain format.

In a possible design solution, the processing module may be further configured to: after determining the first information, control the transceiver module to send second information to a first device. The second information indicates the first device to adjust a time domain position of the first resource.

In a possible design solution, the processing module may be further configured to adjust a time domain position of a third resource after determining the first information. The apparatus according to the fourth aspect is configured with the third resource. The third resource is a resource that causes interference to the first resource.

Optionally, that the apparatus according to the fourth aspect adjusts the time domain position of the third resource is: The apparatus reduces a time domain length of the third resource and increases a time domain length of a fourth resource corresponding to the third resource. The fourth resource is used to perform at least one of the following functions: a communication function, a sensing function, or a protection function.

Further, the fourth resource is a resource whose frequency domain position is the same as that of the third resource and whose time domain position is different from that of the third resource.

In a possible design solution, the processing module may be further configured to: after determining the first information, control the transceiver module to send third information to a third device. The third device is configured with a third resource. The third resource is a resource that causes interference to the first resource. The third information indicates the third device to adjust a time domain position of the third resource.

Optionally, the transceiver module may alternatively include a sending module and a receiving module. The sending module is configured to implement a sending function of the apparatus according to the fourth aspect. The receiving module is configured to implement a receiving function of the apparatus according to the fourth aspect.

Optionally, the apparatus according to the fourth aspect may further include a storage module. The storage module stores a program or instructions. When the processing module executes the program or the instructions, the apparatus is enabled to perform the method according to the second aspect.

It should be noted that the apparatus according to the fourth aspect may be a terminal or a network device, or may be a chip (system) or another part or component that may be disposed in a terminal or a network device, or may be an apparatus that includes a terminal or a network device. This is not limited in this application.

In addition, for technical effects of the apparatus according to the fourth aspect, refer to the technical effects of the method according to the second aspect. Details are not described herein again.

According to a fifth aspect, a communication apparatus is provided. The apparatus includes a processor. The processor is configured to perform the method according to the first aspect or the second aspect.

In a possible design solution, the apparatus according to the fifth aspect may further include a transceiver. The transceiver may be a transceiver circuit or an interface circuit. The transceiver may be used by the apparatus to communicate with another apparatus.

In a possible design solution, the apparatus according to the fifth aspect may further include a memory. The memory may be integrated with the processor, or may be disposed separately from the processor. The memory may be configured to store a computer program and/or data related to the method according to the first aspect or the second aspect.

In this application, the apparatus according to the fifth aspect may be the terminal or the network device in the first aspect or the second aspect, for example, the first device or the second device, or a chip (system) or another part or component that may be disposed in the terminal or the network device, or an apparatus that includes the terminal or the network device.

In addition, for technical effects of the apparatus according to the fifth aspect, refer to the technical effects of the method according to the first aspect or the second aspect. Details are not described herein again.

According to a sixth aspect, a communication apparatus is provided. The apparatus includes a processor and a memory. The memory is configured to store computer instructions. When the processor executes the instructions, the apparatus is enabled to perform the method according to the first aspect or the second aspect.

In a possible design solution, the apparatus according to the sixth aspect may further include a transceiver. The transceiver may be a transceiver circuit or an interface circuit. The transceiver may be used by the apparatus to communicate with another apparatus.

In this application, the apparatus according to the sixth aspect may be the terminal or the network device in the first aspect or the second aspect, for example, the first device or the second device, or a chip (system) or another part or component that may be disposed in the terminal or the network device, or an apparatus that includes the terminal or the network device.

In addition, for technical effects of the apparatus according to the sixth aspect, refer to the technical effects of the method according to the first aspect or the second aspect. Details are not described herein again.

According to a seventh aspect, a communication apparatus is provided. The apparatus includes a logic circuit and an input/output interface. The input/output interface is configured to: obtain code instructions and transmit the code instructions to the logic circuit. The logic circuit is configured to run the code instructions to perform the method according to the first aspect or the second aspect.

In this application, the apparatus according to the seventh aspect may be the terminal or the network device in the first aspect or the second aspect, for example, the first device or the second device, or a chip (system) or another part or component that may be disposed in the terminal or the network device, or an apparatus that includes the terminal or the network device.

In addition, for technical effects of the apparatus according to the seventh aspect, refer to the technical effects of the method according to the first aspect or the second aspect. Details are not described herein again.

According to an eighth aspect, a communication apparatus is provided. The apparatus includes a processor and a transceiver. The transceiver is configured to exchange information between the communication apparatus and another apparatus. The processor executes program instructions to perform the method according to the first aspect or the second aspect.

In a possible design solution, the apparatus according to the eighth aspect may further include a memory. The memory may be integrated with the processor, or may be disposed separately from the processor. The memory may be configured to store a computer program and/or data related to the method according to the first aspect or the second aspect.

In this application, the apparatus according to the eighth aspect may be the terminal or the network device in the first aspect or the second aspect, for example, the first device or the second device, or a chip (system) or another part or component that may be disposed in the terminal or the network device, or an apparatus that includes the terminal or the network device.

In addition, for technical effects of the apparatus according to the eighth aspect, refer to the technical effects of the method according to the first aspect or the second aspect. Details are not described herein again.

According to a ninth aspect, a communication system is provided. The communication system includes one or more first devices and one or more second devices. The first device is configured to perform the method according to the first aspect. The second device is configured to perform the method according to the second aspect.

According to a tenth aspect, a computer-readable storage medium is provided, including a computer program or instructions. When the computer program or the instructions is/are run on a computer, the computer is enabled to perform the method according to the first aspect or the second aspect.

According to an eleventh aspect, a computer program product is provided, including a computer program or instructions. When the computer program or the instructions is/are run on a computer, the computer is enabled to perform the method according to the first aspect or the second aspect.

### BRIEF DESCRIPTION OF DRAWINGS

FIG. 1 is a schematic diagram 1 of resource configuration of a communication service and a sensing service;
FIG. 2 is a schematic diagram 2 of resource configuration of a communication service and a sensing service;
FIG. 3 is a schematic diagram of an architecture of a communication system according to an embodiment of this application;
FIG. 4 is a schematic flowchart 1 of a communication method according to an embodiment of this application;
FIG. 5 is a schematic diagram 1 of resource configuration in a communication method according to an embodiment of this application;
FIG. 6 is a schematic diagram 2 of resource configuration in a communication method according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic diagram 1 of a structure of a communication apparatus according to an embodiment of this application;
FIG. 10 is a schematic diagram 2 of a structure of a communication apparatus according to an embodiment of this application; and
FIG. 11 is a schematic diagram 3 of a structure of a communication apparatus according to an embodiment of this application.

### DESCRIPTION OF EMBODIMENTS

The following describes technical terms in embodiments of this application.

### 1. Communication service and sensing service

An electromagnetic wave has communication and sensing (or detection) capabilities. A communication system, for example, a new radio (new radio, NR) system or a long term evolution (long term evolution, LTE) system, may use the communication capability of the electromagnetic wave to transfer information between network nodes, that is, provide a communication service. Similarly, the communication system may use the sensing capability of the electromagnetic wave to implement functions such as positioning, motion status detection, and imaging, that is, provide a sensing service. For a long time, the communication service and the sensing service are technologies that are independent and developed together. However, as a wireless communication technology evolves to a higher operating frequency, for example, a millimeter wave (millimeter wave) and terahertz (terahertz), a wider system bandwidth, for example, hundreds of megahertz (megahertz, MHz) and tens of gigahertz (gigahertz, GHz), and a larger antenna aperture, these features provide a technology implementation foundation for the communication system to integrate the communication service and the sensing service. Therefore, in a next generation communication system, or a future communication system, for example, a 6th generation (6th generation, 6G) communication system, a technology that integrates a wireless communication service and a wireless sensing service, or a technology of integrated communication and sensing, is used as one of key enabling technologies.

### 2. Resource configuration of the communication service and the sensing service

The communication service and the sensing service differ greatly in service requirements and working modes. In consideration of system design and resource management convenience, a time division duplex (time division duplex, TDD) manner is usually used in the industry, to separately configure corresponding resources for the communication service and the sensing service. For example, the communication system may independently configure fixed resources for the communication service and the sensing service, or the communication system may configure a corresponding resource for the sensing service based on the communication service. The following separately describes the configuration.

### Manner 1:

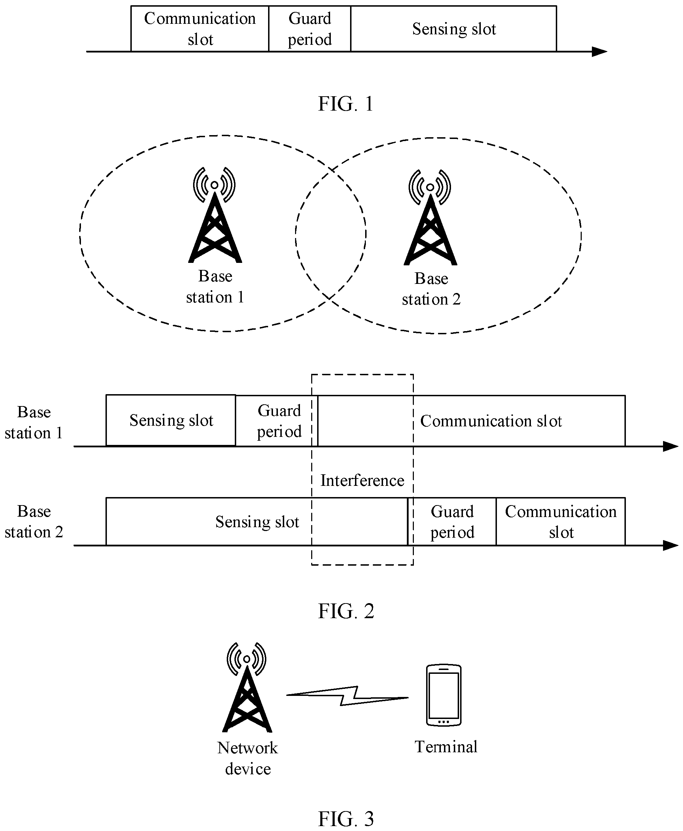

Refer to FIG. 1. A communication system may independently configure fixed resources, for example, slots (slots), for a communication service and a sensing service. The two resources do not affect each other, to meet a communication requirement and a sensing requirement of the system. A resource configured for the communication service may be referred to as a communication resource, for example, a communication slot (communication slot), or the resource is used to perform a communication function or provide a communication service. A resource configured for the sensing service may be referred to as a sensing resource, for example, a sensing slot (sensing slot), or the resource is used to perform a sensing function or provide a sensing service. A resource-for-protection of a specific length may be reserved between the communication resource and the sensing resource, for example, a guard period (guard period, GP), which is also referred to as a black slot (blank slot), and is used to provide necessary slot overheads for the system to switch between the communication service and the sensing service. It can be seen that, in the fixed configuration mode, an advantage is that resource overheads are fixed, and resource management is convenient. For example, the communication service and the sensing service may be independently optimized and designed as required in resources occupied by the communication service and the sensing service. However, a problem is that when there is no sensing service, the sensing resource is idle. This causes a waste of the sensing resource. Consequently, a communication capacity of the communication system is reduced, and vice versa.

### Manner 2:

Refer to FIG. 2. A communication system may configure a corresponding resource for a sensing service based on a communication service. For example, the communication system may preferentially configure a communication resource, and perform preliminary sensing on a to-be-sensed target by using a communication signal carried by the communication resource, to obtain some prior information of the to-be-perceived target, for example, a position of the target, a rough moving speed, and a quantity of targets. In this way, the communication system can determine a subsequently required sensing resource based on these pieces of prior information, and further configure a sensing resource of a corresponding length, to configure a sensing resource as required. This helps improve a communication capacity of the system. In this configuration mode, for different devices, lengths of sensing resources configured for the devices are usually different. Sensing resources and communication resources of adjacent devices easily overlap in time domain. This causes communication interference. For example, as shown in FIG. 2, a first device (for example, a base station (base station, BS) 1) and a second device (for example, a BS 2) are neighboring base stations of each other. A sensing slot of the BS 2 is longer, exceeds a sensing slot and a guard period of the BS 1, and overlaps a communication slot of the BS 1. In this case, communication interference is caused between a communication signal of the BS 1 and a sensing signal of the BS 2. This causes deterioration of a transmission condition of the communication signal of the BS 1. A signal-to-interference-plus-noise ratio (signal-to-interference-plus-noise ratio, SINR) is reduced, and communication quality of the BS 1 is affected. This further causes a decrease in sensing precision of the BS 2.

In conclusion, for the foregoing technical problems, embodiments of this application provide the following technical solutions, to reduce communication interference between devices and improve communication quality.

The technical solutions in embodiments of this application may be applied to various communication systems, such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, such as an LTE system, a 5th generation (5th generation, 5G) mobile communication system, such as an NR system, and a future communication system, such as a 6th generation (6th generation, 6G). Certainly, the future communication system may also be named in another manner, which is still within the scope of this application. This is not limited in this application.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, relevant)", and "corresponding (corresponding)" may sometimes be interchangeably used. It should be noted that meanings expressed by the terms are consistent when differences of the terms are not emphasized. In addition, "/" mentioned in this application may be used to represent an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

For ease of understanding of embodiments of this application, a communication system shown in FIG. 3 is first used as an example to describe in detail a communication system applicable to embodiments of this application. For example, FIG. 3 is a schematic diagram of an architecture of a communication system to which a communication method according to embodiments of this application is applicable.

As shown in FIG. 3, the communication system includes a terminal and a network device.

The terminal is a terminal that accesses a network and has a wireless transceiver function, or a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in this embodiment of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted subassembly, a vehicle-mounted component, a vehicle-mounted chip, or a vehicle-mounted unit that is built in a vehicle as one or more components or units.

The network device, for example, a radio access network (radio access network, RAN) device, is a device that is located on a network side of the communication system and has a wireless transceiver function, or a chip or a chip system that may be disposed in the device. The network device may include a next generation mobile communication system, for example, a 6G access network device, for example, a 6G base station, or a 6G core network element. Alternatively, in the next generation mobile communication system, the network device may be named in another manner, which falls within the protection scope of embodiments of this application. This is not limited in this application. In addition, the network device may also include 5G, for example, a gNB in an NR system, or one or a group of (including a plurality of antenna panels) antenna panels of a base station in 5G, or may be a network node that forms a gNB, a transmission point (transmission and reception point, TRP or transmission point, TP), or a transmission measurement function (transmission measurement function, TMF), for example, a baseband unit (BBU), a central unit (centralized unit, CU) or a distributed unit (distributed unit, DU), an RSU having a base station function, a wired access gateway, or a 5G core network element. In addition, the network device may further include an access point (access point, AP), a wireless relay node, a wireless backhaul node, macro base stations, micro base stations (also referred to as small cells), relay stations, access points, wearable devices, vehicle-mounted devices, and the like in various forms in a wireless fidelity (wireless fidelity, Wi-Fi) system.

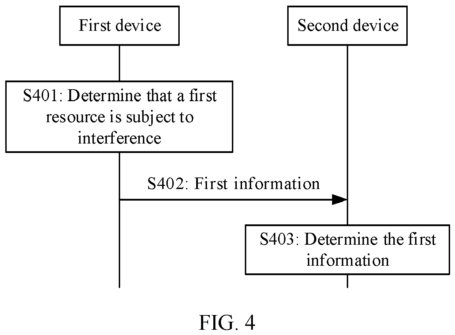

The foregoing describes a communication system to which the communication method provided in embodiments of this application is applicable. The following specifically describes the communication method provided in embodiments of this application with reference to FIG. 4 to FIG. 8.

For example, FIG. 4 is a schematic flowchart 1 of a communication method according to an embodiment of this application. The communication method is applicable to communication between a first device and a second device. The first device and the second device may be terminals or network devices in the communication system shown in FIG. 3. For example, the first device and the second device are terminals, or the first device and the second device are network devices. As shown in FIG. 4, the communication method includes S401, S402, and S403.

S401: A first device determines that a first resource is subject to interference.

The first device is configured with a resource used to perform a communication function and a sensing function, that is, configured with a communication resource and a sensing resource. For a specific configuration principle, refer to related descriptions in the foregoing "Manner 2". Details are not described again. That the communication resource is used to perform the communication function means that the communication resource is mainly used to perform the communication function. Optionally, the communication resource may also be used to perform the sensing function, and therefore may be referred to as a resource of integrated communication and sensing. Similarly, that the sensing resource is used to perform the sensing function means that the sensing resource is mainly used to perform the sensing function. Optionally, the sensing resource may also be used to perform the communication function, and therefore may also be referred to as a resource of integrated communication and sensing. Both the communication resource and the sensing resource may occupy one or more time units. The time unit may be a slot, a symbol (symbol), a mini-slot (mini-slot), a subframe (subframe), a radio frame (radio frame), or the like. This is not limited in this application. For a TDD system, a communication resource and a sensing resource may respectively occupy different time units. Alternatively, for a frequency division duplex (frequency division duplex, FDD) system or a full-duplex system, a communication resource and a sensing resource may occupy a same time unit. This is not limited in this application. For ease of understanding, the following uses a TDD system as an example for description.

The first resource may be a resource in the communication resource and the sensing resource that are configured by the first device, or may be a resource configured by another device. For ease of understanding, the following uses an example in which the first resource is a resource in the communication resource and the sensing resource that are configured by the first device for description. The first resource is used to perform at least one of the following functions: the communication function or the sensing function. If the first resource is used to perform the communication function only, the first resource may be the communication resource described above. If the first resource is used to perform the sensing function only, the first resource may be the sensing resource described above. If the first resource is used to perform both the communication function and the sensing function, the first resource may be the resource of integrated communication and sensing described above.

In an implementation, the first device may determine, based on received power, whether the first resource is subject to interference. For example, if the received power on the first resource exceeds a received power threshold, it indicates that the first device further receives another signal, for example, an interference signal, on the first resource. In this way, it is determined that the first resource is subject to interference. Alternatively, the first device may determine, based on another possible parameter, whether the first resource is subject to interference. For example, the first device may alternatively determine, based on at least one of the following items on the first resource: a signal-to-noise ratio (signal-to-noise ratio, SNR), a code error rate (symbol error rate, SER), or a block error rate (block error rate, BET), that the first resource is subject to interference. The signal-to-noise ratio is used as an example. If the first device determines that a signal-to-noise ratio of a first service is less than a signal-to-noise ratio threshold, it indicates that noise on the first resource may be generated by an interference signal. In this way, it is determined that the first resource is subject to interference. The symbol error rate is used as an example. If the first device determines that a symbol error rate on the first resource is higher than a symbol error rate threshold, it indicates that the first device cannot correctly perform decoding on the first resource due to interference from another signal. In this way, it is determined that the first resource is subject to interference.

S402: The first device sends first information. Correspondingly, a second device obtains the first information.

The first information may include at least one of the following items of the first resource: frequency domain information or time domain information, so that a device causing interference, for example, the second device or a third device, can determine a time-frequency position of the first resource based on the first information. Optionally, the first information may further include a service priority of the first resource.

In a possible manner, the frequency domain information may include at least one of the following items of the first resource: a channel (channel) identifier (also referred to as a channel sequence number) or a frequency band (frequency) identifier (also referred to as a frequency band sequence number). In this way, the device causing interference, for example, the second device or the third device, can flexibly adjust, based on the first information, resource configuration of the device by using different granularities (for example, using a channel as a granularity or using a frequency band as a granularity), or indicate the first device to adjust resource configuration of the first device, to reduce communication interference between devices and improve communication quality. For example, a bandwidth of the system is 100 MHz, including five channels (where each channel occupies 20 MHz and a subcarrier (subcarrier) spacing). Frequency domain indexes of the five channels are represented as {C-index1, C-index2, C-index3, C-index4, C-index5}. The first resource is located on a channel 1, and the frequency domain information of the first resource is C-index1; or the first resource is located on a channel 2 and a channel 3, and the frequency domain information of the first resource is C-index2+C-index3. For another example, the first device may operate in a plurality of frequency bands, for example, five frequency bands including a frequency band of 3 GHz and a millimeter wave or a terahertz frequency band. Indexes of the five frequency bands are represented as {F - index 1, F-index2, F-index3, F-index4, F-index5}. The first resource is located on a frequency band 1, and the frequency domain information of the first resource is F-index1; or the first resource is located on a frequency band 2 and a frequency band 3, and the frequency domain information of the first resource is F-index2+F-index3. It may be understood that, that the frequency domain position of the first resource is indicated based on the channel identifier and the frequency band identifier is merely an example. This is not limited. The first information may alternatively indicate an absolute frequency domain position of the first resource, for example, a frequency and a bandwidth of the first resource.

In a possible manner, the time domain information may include at least one of the following items of the first resource: a time domain position or a time domain format, so that the device causing interference can accurately determine a time domain length of the first resource based on the first information.

For example, the time domain position of the first resource may be represented based on position indexes (also referred to as position sequence numbers) of time units. The position indexes of time units include a position index of each time unit occupied by the first resource, or include only a position index of a start time unit and a position index of an end time unit in all time units occupied by the first resource, to reduce signaling overheads. It should be noted that when a time unit includes a sub-time unit (for example, a slot includes a symbol), if the first information indicates an index of the time unit, it indicates that the time unit is fully occupied by the first resource; or if the first information indicates an index of the sub-time unit in the time unit, it indicates that the time unit is not fully occupied by the first resource, and only the indicated sub-time unit is occupied by the first resource. For example, the time unit is a slot, the first resource occupies five slots, and position indexes indicated by the first information are {slot-index1, slot-index2, slot-index3, slot-index4, slot-index5} or {slot-index1, slot-index5}. For example, the time unit is a slot, the first resource occupies the last two symbols in the 1^{st} slot, the first resource occupies all symbols in the 2^{nd} slot, the first resource occupies the first two symbols in the 3^{rd} slot, and position indexes indicated by the first information are {slot-index1 (symbol-index12, symbol-index13), slot-index2, slot-index3 (symbol-index0, symbol-index1)}, or {slot-index 1 (symbol-index12), slot-index3 (symbol-index1)}.

Alternatively, the time domain format of the first resource may be represented based on a format index corresponding to a time unit, and the format index may be a format index of an upper-level time unit including the time unit. For example, the time unit is a symbol, the first resource occupies one or more symbols, and the format index indicated by the first information may be a format index of a slot in which the one or more symbols are located. For example, the time unit is a slot, the first resource occupies one or more slots, and the format index indicated by the first information may be a format index of a subframe in which the one or more slots are located. In this case, the device causing interference, for example, the second device or the third device, is usually configured with a format index table, so that the device causing interference can traverse the format index table based on the format index indicated by the first information, to determine the time domain position of the first resource. For specific implementation, refer to related descriptions in the following "S403". Details are not described again. It may be understood that, that the time domain position of the first resource is indicated based on the position index is merely an example. This is not limited. The first information may alternatively indicate an absolute time domain position of the first resource, for example, a time period occupied by the first resource. The time period includes a start time of the first resource and an end time of the first resource.

The first information may be carried in a first reference signal for sensing collision coordination (reference signaling for sensing collision coordination, SCC), or may be carried in any possible message, for example, a system information block (system information block, SIB) 1, downlink control information (downlink control information, DCI), a media access control-control element (media access control-control element, MAC-CE), radio resource control (radio resource control, RRC) signaling, or sidelink control information (sidelink control information, SCI). This is not limited in this application.

It may be understood that the second device may be a device that causes interference to the first device, or may be a network controller at a higher network layer. A type of the second device varies, and a procedure performed by the second device also varies. The following provides a specific description with reference to S403.

S403: The second device determines the first information.

The second device may determine the first information, for example, parse the first information, to obtain the at least one of the following items of the first resource: frequency domain information or time domain information, and optionally, may further obtain the service priority of the first resource. The second device may determine the time-frequency position of the first resource based on the at least one of the following items of the first resource: frequency domain information or time domain information. Specifically, if the at least one of the following items of the first resource includes the frequency domain information and the time domain information, the second device may directly determine the time-frequency position of the first resource. For example, the second device determines the frequency domain position of the first resource based on the frequency domain information, and determines the time domain position of the first resource based on the position index or by traversing the format index table based on the format index. Alternatively, if the at least one of the following items of the first resource includes only the frequency domain information, the second device may determine the time-frequency position of the first resource based on the time domain information that is of the first resource and that is pre-stored by the second device. Alternatively, if the at least one of the following items of the first resource includes only the time domain information, the second device may determine the time-frequency position of the first resource based on the frequency domain information that is of the first resource and that is pre-stored by the second device.

It may be understood that, if the second device is a device that causes interference to the first resource, for example, a neighboring device of the first device, the second device may adjust a resource of the second device, or indicate the first device to adjust a resource of the first device, to reduce interference. Alternatively, if the second device is a network controller at a higher network layer, for example, a core network element, the second device indicates a device that causes interference to the first resource, for example, the third device, to adjust a resource of the third device, or indicates the first device to adjust a resource of the first device, to reduce interference. Details are described below.

Case 1: The second device is a device that causes interference to the first resource.

The second device may determine, based on the time-frequency position of the first resource, that a resource causing interference to the first resource is a third resource. The third resource is a resource configured by the second device, and is used to perform at least one of the following functions: a communication function or a sensing function. For a specific configuration principle, refer to related descriptions of the first resource. Details are not described again. The second device may compare the service priority of the first resource with a service priority of the third resource, to choose to adjust the time domain position of the first resource or a time domain position of the third resource based on an order of service priorities. It may be understood that the second device may obtain the service priority of the first resource based on the first information, or the second device is preconfigured with the service priority of the first resource. This is not limited in this application.

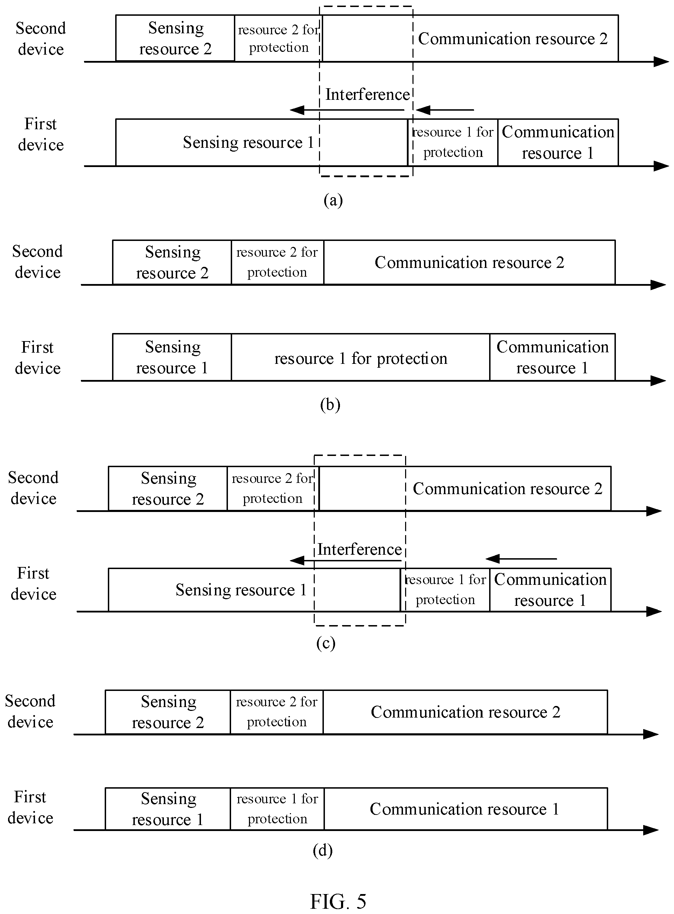

In a possible case, if the service priority of the first resource is lower than the service priority of the third resource, it indicates that the time domain position of the first resource needs to be adjusted, and the second device may send second information to the first device. The second information may be carried in a second SCC or any other possible message (for example, a SIB 1, an RCC message, a DCI message, a MAC-CE message, or an SCI message), and indicate the first device to adjust the time domain position of the first resource. For example, the second information may include the adjusted time domain information of the first resource, for example, include at least one of the following items: the adjusted time domain position of the first resource or the adjusted time domain format of the first resource. For specific implementation, refer to related descriptions in "S402". Details are not described again. Correspondingly, the first device obtains the second information and adjusts the time domain position of the first resource based on the second information, to reduce or avoid time domain overlapping between the first resource and the third resource. This effectively reduces communication interference between devices and improves communication quality. Optionally, that the first device adjusts the time domain position of the first resource may be: The first device reduces a time domain length of the first resource, or reduces a quantity of time domain resources associated with the first resource, for example, reduces, by using a time unit as a granularity, a quantity of time units associated with the first resource, and increases a time domain length of a second resource corresponding to the first resource, or increases a quantity of time domain resources associated with the second resource, for example, increases, by using a time unit as a granularity, a quantity of time domain resources associated with the second resource, to improve resource utilization and improve communication efficiency. The second resource is a resource whose frequency domain position is the same as that of the first resource and whose time domain position is different from that of the first resource. The second resource is used to perform at least one of the following functions: a communication function, a sensing function, or a protection function. That the second resource is used to perform the protection function means that the second resource is used to provide time protection for the first device to switch a function (for example, switch from the communication function to the sensing function, or switch from the sensing function to the communication function), that is, may include a guard period. For example, as shown in (a) in FIG. 5, the first resource is a sensing resource 1, the second resource is a resource-for-protection 1 of the sensing resource 1, and the third resource is a communication resource 2. The first device may reduce a time domain length of the sensing resource 1 and increase a time domain length of the resource-for-protection 1. Then, as shown in (b) in FIG. 5, the adjusted sensing resource 1 and the communication resource 2 do not overlap in time domain, and interference between the two resources is eliminated. For another example, as shown in (c) in FIG. 5, the first resource is a sensing resource 1, the second resource is a communication resource 1 adjacent to a resource-for-protection 1 of the sensing resource 1, and the third resource is a communication resource 2. The first device may reduce a time domain length of the sensing resource 1 and increase a time domain length of the communication resource 1. Then, as shown in (d) in FIG. 5, the adjusted sensing resource 1 and the communication resource 2 do not overlap in time domain, and interference between the two resources is eliminated.

It should be noted that the adjusted time domain position of the first resource is still associated with the frequency domain position of the first resource, for example, a channel or a frequency band on which the first resource is located. In addition, the adjusted time domain position of the first resource should ensure that the first resource can still meet a service requirement, that is, meet a communication requirement and/or a sensing requirement. In other words, a time domain length of the first resource is reduced on a basis that the service requirement is met. If the first resource meets the shortest time domain length required by a service and does not overlap the third resource in time domain, the time domain length of the first resource may be reduced to a time domain length in which the first resource does not overlap the third resource in time domain. If the first resource meets the shortest time domain length required by a service and still overlaps the third resource in time domain, the time domain length of the first resource may be reduced to the shortest time domain length required by the service, to ensure the service requirement and reduce communication interference.

It should be further noted that an example in which the time domain position of the first resource is adjusted is used in the foregoing descriptions. This is not limited. For example, the first device may alternatively adjust the frequency domain position of the first resource. For example, the first device may reduce a frequency domain length of the first resource, or reduce a quantity of frequency domain resources associated with the first resource, for example, reduce, by using a channel (subcarrier) as a granularity, a quantity of channels (a quantity of subcarriers) associated with the first resource, and increase a frequency domain length of a second resource corresponding to the first resource, or increase a quantity of frequency domain resources associated with the second resource, for example, increase, by using a channel (subcarrier) as a granularity, a quantity of channels (a quantity of subcarriers) associated with the second resource, to improve resource utilization and improve communication efficiency.

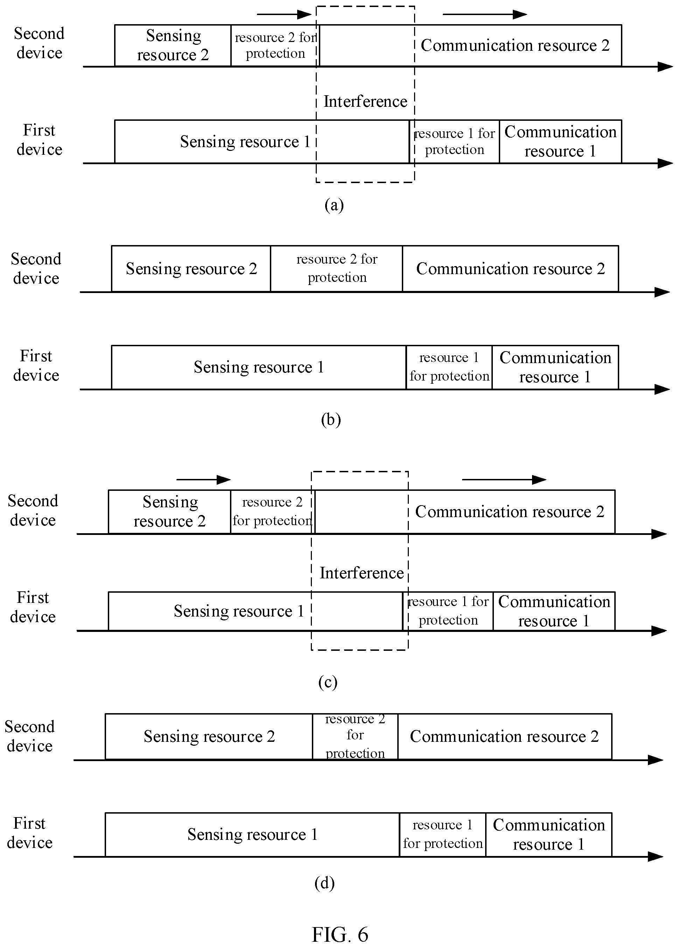

Alternatively, in another possible case, if the service priority of the first resource is higher than or equal to the service priority of the third resource, it indicates that the time domain position of the third resource needs to be adjusted, and the second device adjusts the time domain position of the third resource, to reduce or avoid time domain overlapping between the first resource and the third resource. This effectively reduces communication interference between devices and improves communication quality. Optionally, that the second device adjusts the time domain position of the third resource may be: The second device reduces a time domain length of the third resource, or reduces a quantity of time domain resources associated with the third resource, for example, reduces, by using a time unit as a granularity, a quantity of time units associated with the third resource, and increases a time domain length of a fourth resource corresponding to the third resource, or increases a quantity of time domain resources associated with the fourth resource, for example, increases, by using a time unit as a granularity, a quantity of time units associated with the fourth resource, to improve resource utilization and improve communication efficiency. The fourth resource is a resource whose frequency domain position is the same as that of the third resource and whose time domain position is different from that of the third resource. The fourth resource is used to perform at least one of the following functions: a communication function, a sensing function, or a protection function. That the fourth resource is used to perform the protection function means that the fourth resource is used to provide time protection for the second device to switch a function (for example, switch from the communication function to the sensing function, or switch from the sensing function to the communication function), that is, may include a guard period. For example, as shown in (a) in FIG. 6, the first resource is a sensing resource 1, the third resource is a communication resource 2, and the fourth resource is a resource-for-protection 2 of the communication resource 2. The second device may reduce a time domain length of the communication resource 2 and increase a time domain length of the resource-for-protection 2. Then, as shown in (b) in FIG. 6, the adjusted communication resource 2 and the sensing resource 1 do not overlap in time domain, and interference between the two resources is eliminated. For another example, as shown in (c) in FIG. 6, the first resource is a sensing resource 1, the third resource is a communication resource 2, and the fourth resource is a sensing resource 2 adjacent to a resource-for-protection 2 of the communication resource 2. The first device may reduce a time domain length of the communication resource 2 and increase a time domain length of the sensing resource 2. Then, as shown in (d) in FIG. 6, the adjusted communication resource 2 and the sensing resource 1 do not overlap in time domain, and interference between the two resources is eliminated.

It should be noted that the adjusted time domain position of the third resource is still associated with the frequency domain position of the third resource, for example, a channel or a frequency band on which the third resource is located. In addition, the adjusted time domain position of the third resource should ensure that the third resource can still meet a service requirement, that is, meet a communication requirement and/or a sensing requirement. In other words, a time domain length of the third resource is reduced on a basis that the service requirement is met. If the third resource meets the shortest time domain length required by a service and does not overlap the first resource in time domain, the time domain length of the third resource may be reduced to a time domain length in which the third resource does not overlap the first resource in time domain. If the third resource meets the shortest time domain length required by a service and still overlaps the first resource in time domain, the time domain length of the third resource may be reduced to the shortest time domain length required by the service, to ensure the service requirement and reduce communication interference.

It should be further noted that an example in which the time domain position of the third resource is adjusted is used in the foregoing descriptions. This is not limited. For example, the second device may alternatively adjust the frequency domain position of the third resource. For example, the second device may reduce a frequency domain length of the third resource, or reduce a quantity of frequency domain resources associated with the third resource, for example, reduce, by using a channel (subcarrier) as a granularity, a quantity of channels (a quantity of subcarriers), namely, a quantity of frequency domain resources, associated with the third resource, and increase a frequency domain length of a fourth resource corresponding to the third resource, or increase a quantity of frequency domain resources associated with the fourth resource, for example, increase, by using a channel (subcarrier) as a granularity, a quantity of channels (a quantity of subcarriers), namely, a quantity of frequency domain resources, associated with the second resource, to improve resource utilization and improve communication efficiency.

Case 2: The second device is a network controller at a higher network layer.

The second device may determine, based on the time-frequency position of the first resource, that a resource causing interference to the first resource is a third resource. The second device may compare the service priority of the first resource with a service priority of the third resource, to choose to adjust the time domain position of the first resource or a time domain position of the third resource based on an order of service priorities. The second device may obtain the service priority of the first resource based on the first information, or the second device is preconfigured with the service priority of the first resource. This is not limited in this application. Similarly, the second device may obtain the service priority of the third resource from the third device. The third device is configured with the third resource, or the second device is preconfigured with the service priority of the third resource. This is not limited in this application.

In a possible case, if the service priority of the first resource is lower than the service priority of the second resource, it indicates that the time domain position of the first resource needs to be adjusted, and the second device may send second information to the first device. For specific implementation, refer to related descriptions in the foregoing "Case 1". Details are not described again.

Alternatively, in another possible case, if the service priority of the first resource is higher than or equal to the service priority of the third resource, it indicates that the time domain position of the third resource needs to be adjusted, and the second device may send third information to the third device. The third information may be carried in a third SCC or any other possible message (for example, a SIB 1, an RCC message, a DCI message, a MAC-CE message, or an SCI message), and indicate the third device to adjust the time domain position of the third resource, to reduce or avoid time domain overlapping between the first resource and the third resource. This effectively reduces communication interference between devices and improves communication quality. For a specific implementation principle of adjusting the time domain position of the third resource by the third device, refer to related descriptions in the foregoing "Case 1". Details are not described again.

It should be noted that, that the second device chooses to adjust the first resource or the third resource based on an order of service priorities is merely an example. This is not limited. For example, the second device may alternatively choose to adjust the first resource or the third resource based on time domain positions of the first resource and the third resource relative to each other. For example, if the first resource completely covers the third resource in time domain, the second device may choose to reduce the time domain length of the first resource. On the contrary, if the third resource completely covers the first resource in time domain, the second device may choose to reduce the time domain length of the third resource.

Optionally, the first device is a network device. After adjusting the time domain position of the first resource, the first device may synchronize the adjusted time domain position of the first resource to a terminal (for example, a terminal camping on a cell of the first device). Alternatively, the second device/the third device is a network device. After adjusting the time domain position of the third resource, the second device/the third device may also synchronize the adjusted time domain position of the third resource to a terminal (for example, a terminal camping on a cell of the second device/the third device).

It should be further noted that the foregoing uses an example of communication interference between two devices, namely, the first device and the second device. The method provided in this embodiment of this application may be applied to communication interference between a plurality of devices. For a specific implementation principle, refer to the foregoing related descriptions of the first device and the second device. Details are not described again.

In conclusion, it can be learned from the method shown in FIG. 4 that when determining that the first resource is subject to interference, the first device may indicate, based on the first information, that the first resource is subject to interference. Correspondingly, when obtaining the first information, the second device may determine, based on the first information, that the first resource is subject to interference. In this way, the resource can be subsequently adjusted based on the first information, to reduce communication interference between devices and improve communication quality.

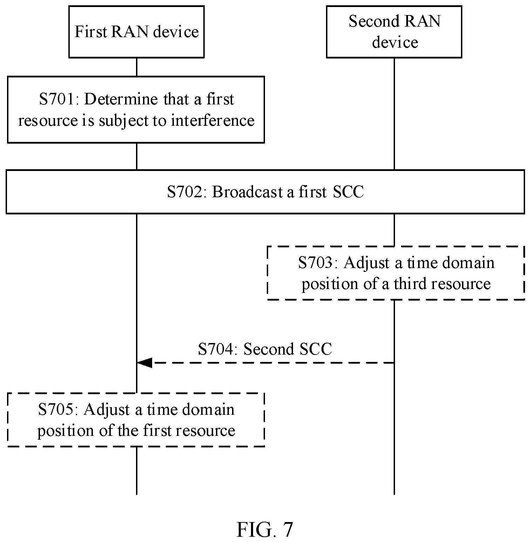

With reference to FIG. 4, the foregoing describes an overall procedure of the communication method provided in embodiments of this application. With reference to FIG. 7 to FIG. 8, the following describes in detail a procedure of the communication method shown in FIG. 4 in a specific application scenario.

For example, FIG. 7 is a schematic flowchart 2 of a communication method according to an embodiment of this application. The communication method is applicable to communication between a first RAN device and a second RAN device. As shown in FIG. 7, the communication method may include the following steps.

S701: A first RAN device determines that a first resource is subject to interference.

For a specific implementation principle of S701, refer to related descriptions in the foregoing "S401". Details are not described again.

S702: The first RAN device broadcasts a first SCC. Correspondingly, a second RAN device obtains the first SCC.

The first SCC carries first information, indicating that the first resource is subject to interference. For a specific implementation principle, refer to related descriptions in the foregoing "S402". Details are not described again. It should be noted that the first RAN device does not determine which device causes interference, and therefore chooses to broadcast the first SCC, so that a device causing interference, namely, the second RAN device, can obtain the first SCC.

S703: The second RAN device adjusts a time domain position of a third resource.

S704: The second RAN device sends a second SCC to the first RAN device. Correspondingly, the first RAN device obtains the second SCC.

S705: The first RAN device adjusts a time domain position of the first resource.

S703 to S705 are optional steps. If the second RAN device determines, based on an order of service priorities, that the third resource configured by the second RAN device needs to be adjusted, S703 is performed; or if the second RAN device determines, based on an order of service priorities, that the first resource configured by the first RAN device needs to be adjusted, S704 and S705 are performed. In addition, for a specific implementation principle of S703 to S705, refer to related descriptions in the foregoing "S403" and the foregoing "Case 1". Details are not described again. It may be understood that the first RAN device and the second RAN device are merely examples. This is not limited. For example, the first RAN device may be replaced with first UE, and the second RAN device may be replaced with second UE.

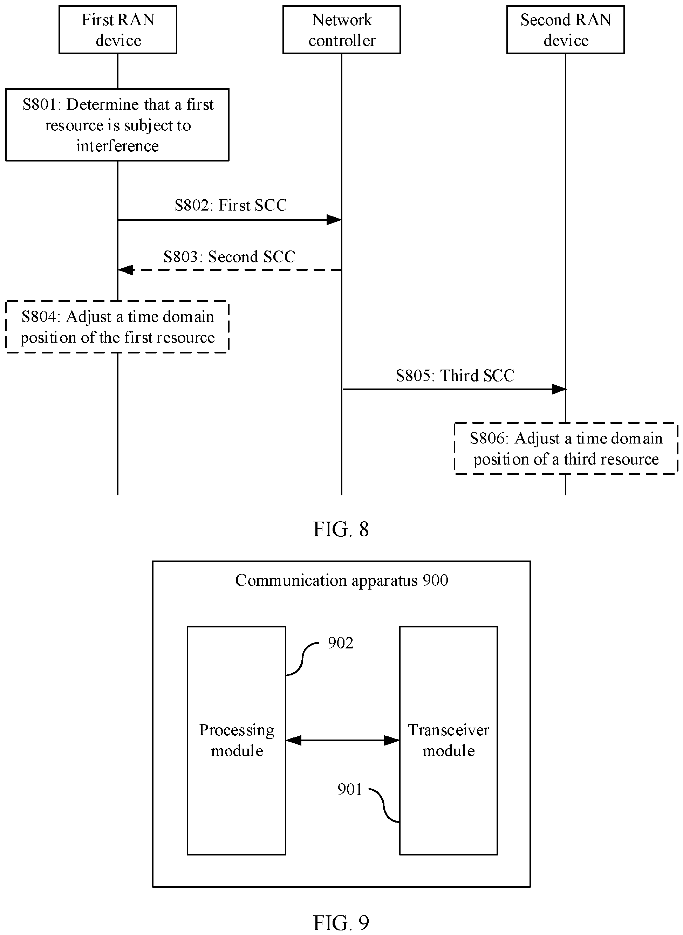

For example, FIG. 8 is a schematic flowchart 3 of a communication method according to an embodiment of this application. The communication method is applicable to communication between a first RAN device, a second RAN device, and a network controller. As shown in FIG. 7, the communication method may include the following steps.

S801: A first RAN device determines that a first resource is subject to interference.

For a specific implementation principle of S801, refer to related descriptions in the foregoing "S401". Details are not described again.

S802: The first RAN device sends a first SCC to a network controller. Correspondingly, the network controller obtains the first SCC.

The first SCC carries first information, indicating that the first resource is subject to interference. For a specific implementation principle, refer to related descriptions in the foregoing "S402". Details are not described again.

S803: The network controller sends a second SCC to the first RAN device. Correspondingly, the first RAN device obtains the second SCC.

S804: The first RAN device adjusts a time domain position of the first resource based on the second SCC.

S805: The network controller sends a third SCC to a second RAN device. Correspondingly, the second RAN device obtains the third SCC.

S806: The second RAN device adjusts a time domain position of a third resource based on the third SCC.

S803 to S806 are optional steps. If the network controller determines, based on an order of service priorities, that the first resource configured by the first RAN device needs to be adjusted, S803 and S804 are performed; or if the network controller determines, based on an order of service priorities, that the third resource configured by the second RAN device needs to be adjusted, S805 and S806 are performed. In addition, for a specific implementation principle of S803 and S804, refer to related descriptions in the foregoing "S403" and the foregoing "Case 1". For a specific implementation principle of S805 and S806, refer to related descriptions in the foregoing "S403" and the foregoing "Case 2". Details are not described again. It may be understood that the first RAN device and the second RAN device are merely examples. This is not limited. For example, the first RAN device may be replaced with first UE, and the second RAN device may be replaced with second UE.

With reference to FIG. 4 to FIG. 8, the foregoing describes in detail the communication method provided in embodiments of this application. With reference to FIG. 9 to FIG. 11, the following describes in detail a communication apparatus configured to perform the communication method provided in embodiments of this application.

For example, FIG. 9 is a schematic diagram 1 of a structure of a communication apparatus according to an embodiment of this application. As shown in FIG. 9, the communication apparatus 900 includes a transceiver module 901 and a processing module 902. For ease of description, FIG. 9 shows only main components of the communication apparatus.

In an embodiment, the communication apparatus 900 is applicable to the communication system shown in FIG. 3, and implements a function of the first device in the method shown in FIG. 4.

The processing module 902 is configured to determine that a first resource is subject to interference. The transceiver module 901 is configured to send first information. The communication apparatus 900 is configured with a resource used to perform a communication function and a sensing function. The first resource is used to perform at least one of the following functions: the communication function or the sensing function. The first information indicates that the first resource is subject to interference.

In a possible design solution, the first information may include at least one of the following items of the first resource: frequency domain information or time domain information.

Optionally, the frequency domain information may include at least one of the following items of the first resource: a channel identifier or a frequency band identifier.

Optionally, the time domain information may include at least one of the following items of the first resource: a time domain position or a time domain format.

In a possible design solution, the transceiver module 901 may be further configured to obtain second information after sending the first information. The second information indicates the communication apparatus 900 to adjust a time domain position of the first resource.

Optionally, that the communication apparatus 900 adjusts the time domain position of the first resource may be: The communication apparatus 900 reduces a time domain length of the first resource and increases a time domain length of a second resource corresponding to the first resource. The second resource is a resource whose frequency domain position is the same as that of the first resource and whose time domain position is different from that of the first resource.

The second resource is used to perform at least one of the following functions: a communication function, a sensing function, or a protection function.

Optionally, the transceiver module 901 may also include a sending module and a receiving module (not shown in FIG. 9). The sending module is configured to implement a sending function of the communication apparatus 900. The receiving module is configured to implement a receiving function of the communication apparatus 900.

Optionally, the communication apparatus 900 may further include a storage module (not shown in FIG. 9). The storage module stores a program or instructions. When the processing module executes the program or the instructions, the communication apparatus 900 is enabled to implement the function of the first device in the method shown in FIG. 4.

It should be understood that the processing module in the communication apparatus 900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 900 may be a terminal or a network device, or may be a chip (system) or another part or component disposed in a terminal or a network device, or may be an apparatus that includes a terminal or a network device. This is not limited in this application.

In addition, for technical effects of the communication apparatus 900, refer to the corresponding technical effects in the method shown in FIG. 4. Details are not described herein again.

In another embodiment, the communication apparatus 900 is applicable to the communication system shown in FIG. 3, and performs a function of the second device in the method shown in FIG. 4, or performs a function of the first RAN device in the method shown in FIG. 7 or FIG. 8.

The transceiver module 901 is configured to obtain first information. The processing module 902 is configured to determine the first information. The first information indicates that a first resource is subject to interference. The first resource is used to perform at least one of the following functions: a communication function or a sensing function.

In a possible design solution, the first information may include at least one of the following items of the first resource: frequency domain information or time domain information.

Optionally, the frequency domain information may include at least one of the following items of the first resource: a channel identifier or a frequency band identifier.

Optionally, the time domain information may include at least one of the following items of the first resource: a time domain position or a time domain format.

In a possible design solution, the processing module 902 may be further configured to: after determining the first information, control the transceiver module 901 to send second information to a first device. The second information indicates the first device to adjust a time domain position of the first resource.

In a possible design solution, the processing module 902 may be further configured to adjust a time domain position of a third resource after determining the first information. The communication apparatus 900 is configured with the third resource. The third resource is a resource that causes interference to the first resource.

Optionally, that the communication apparatus 900 adjusts the time domain position of the third resource is: The communication apparatus 900 reduces a time domain length of the third resource and increases a time domain length of a fourth resource corresponding to a second resource. The fourth resource is a resource whose frequency domain position is the same as that of the third resource and whose time domain position is different from that of the third resource. The fourth resource is used to perform at least one of the following functions: a communication function, a sensing function, or a protection function.

In a possible design solution, the processing module 902 may be further configured to: after determining the first information, control the transceiver module 901 to send third information to a third device. The third device is configured with a third resource. The third resource is a resource that causes interference to the first resource. The third information indicates the third device to adjust a time domain position of the third resource.

Optionally, the transceiver module 901 may also include a sending module and a receiving module (not shown in FIG. 9). The sending module is configured to implement a sending function of the communication apparatus 900. The receiving module is configured to implement a receiving function of the communication apparatus 900.

Optionally, the communication apparatus 900 may further include a storage module (not shown in FIG. 9). The storage module stores a program or instructions. When the processing module executes the program or the instruction, the communication apparatus 900 may perform a function of the second device in the method shown in FIG. 4, perform a function of the second RAN device in the method shown in FIG. 7, or perform a function of the network controller in the method shown in FIG. 8.

It should be understood that the processing module in the communication apparatus 900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 900 may be a terminal or a network device, or may be a chip (system) or another part or component disposed in a terminal or a network device, or may be an apparatus that includes a terminal or a network device. This is not limited in this application.

In addition, for technical effects of the communication apparatus 900, refer to the corresponding technical effects in the method shown in FIG. 4. Details are not described herein again.

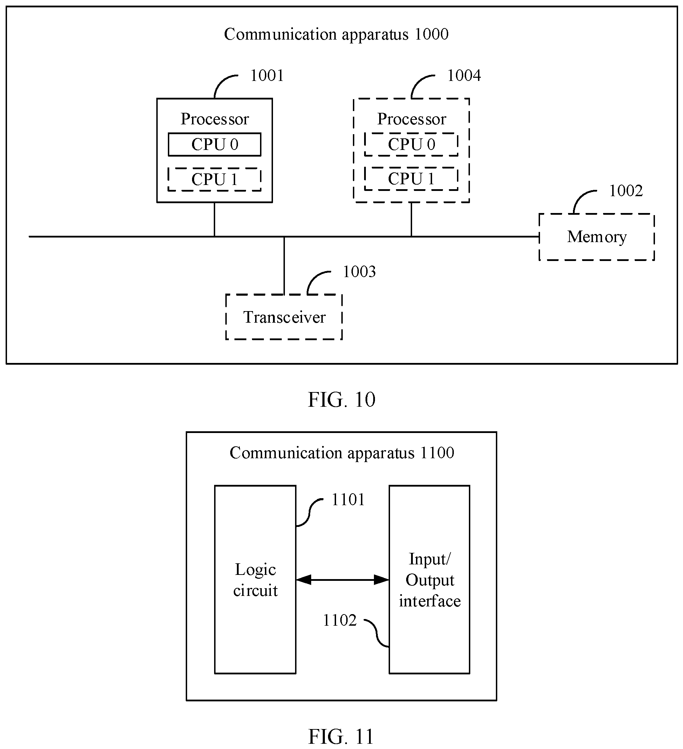

For example, FIG. 10 is a schematic diagram 2 of a structure of a communication apparatus according to an embodiment of this application. The communication apparatus may be a terminal device or a network device, or may be a chip (system) or another part or component that may be disposed in a terminal device or a network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected to the memory 1002 and the transceiver 1003 through a communication bus.

The following describes each component of the communication apparatus 1000 in detail with reference to FIG. 10.

The processor 1001 is a control center of the communication apparatus 1000, and may be a processor, may be a collective term of a plurality of processing elements, or may be referred to as a logic circuit. For example, the processor 1001 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1001 may run or execute a software program stored in the memory 1002, and invoke data stored in the memory 1002, to perform various functions of the communication apparatus 1000.

During specific implementation, in an embodiment, the processor 1001 may include one or more CPUs, for example, a CPU 0 and a CPU 1 shown in FIG. 10.

During specific implementation, in an embodiment, the communication apparatus 1000 may include a plurality of processors, for example, the processor 1001 and a processor 1004 shown in FIG. 2. Each of the processors may be a single-core processor (single-CPU), or may be a multicore processor (multi-CPU). The processor herein may be one or more devices, circuits, and/or processing cores configured to process data (for example, computer program instructions).

The memory 1002 is configured to store a software program for performing the solutions of this application, and is controlled by the processor 1001, so that the method shown in FIG. 4 or the method shown in FIG. 7 or FIG. 8 is performed.

Optionally, the memory 1002 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited thereto. The memory 1002 may be integrated with the processor 1001, or may exist independently, and is coupled to the processor 1001 through an interface circuit or an input/output interface (not shown in FIG. 10) of the communication apparatus 1000. This is not specifically limited in this embodiment of this application.

The transceiver 1003 is configured to communicate with another communication apparatus. For example, the communication apparatus 1000 is a terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the communication apparatus 1000. This is not specifically limited in this embodiment of this application.

It should be noted that the structure of the communication apparatus 1000 shown in FIG. 10 does not constitute a limitation on the communication apparatus. An actual communication apparatus may include more or fewer components than those shown in the figure, some components may be combined, or a different component deployment may be used.

In addition, for technical effects of the communication apparatus 1000, refer to the technical effects of the communication method in the foregoing method embodiments. Details are not described herein again.

For example, FIG. 11 is a schematic diagram 3 of a structure of a communication apparatus according to an embodiment of this application. The communication apparatus may be a terminal device or a network device, or may be a chip (system) or another part or component that may be disposed in a terminal device or a network device. As shown in FIG. 11, the communication apparatus 1100 may include a logic circuit 1101 and an input/output interface 1102. The input/output interface 1102 is configured to: obtain code instructions and transmit the code instructions to the logic circuit 1101. The logic circuit 1101 is configured to run the code instructions to perform the foregoing method.

In addition, for technical effects of the communication apparatus 1100, refer to the technical effects of the communication method in the foregoing method embodiments. Details are not described herein again.

An embodiment of this application provides a communication system. The communication system includes the foregoing one or more terminals and one or more network devices.

It should be understood that in embodiments of this application, the processor may be a CPU, or the processor may be another general-purpose processor, a DSP, an ASIC, a field programmable gate array FPGA or another programmable logic device, a discrete gate or a transistor logic device, a discrete hardware component, or the like. The general-purpose processor may be a microprocessor, or the processor may be any conventional processor, or the like.

It may be understood that the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be all or partially implemented in a form of a computer program product. The computer program product includes one or more computer instructions or computer programs. When the computer instructions or the computer programs or the instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including a single item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a first device, that a first resource is subject to interference, wherein the first device is configured with a resource used to perform a communication function and a sensing function, and the first resource is used to perform at least one of the following functions: the communication function or the sensing function; and
sending, by the first device, first information, wherein the first information indicates that the first resource is subject to interference.

2. The method according to claim 1, wherein after the sending, by the first device, first information, the method further comprises:
obtaining, by the first device, second information, wherein the second information indicates the first device to adjust a time domain position of the first resource.

3. The method according to claim 2, wherein that the first device adjusts the time domain position of the first resource is: reducing, by the first device, a time domain length of the first resource, and increasing a time domain length of a second resource corresponding to the first resource, wherein the second resource is used to perform at least one of the following functions: a communication function, a sensing function, or a protection function.

4. A communication method, wherein the method comprises:
obtaining, by a second device, first information, wherein the first information indicates that a first resource is subject to interference, and the first resource is used to perform at least one of the following functions: a communication function or a sensing function; and
determining, by the second device, the first information.

5. The method according to claim 4, wherein after the determining, by the second device, the first information, the method further comprises:
sending, by the second device, second information to a first device, wherein the second information indicates the first device to adjust a time domain position of the first resource.

6. The method according to claim 4, wherein after the determining, by the second device, the first information, the method further comprises:
adjusting, by the second device, a time domain position of a third resource, wherein the second device is configured with the third resource, and the third resource is a resource that causes interference to the first resource.

7. The method according to claim 6, wherein the adjusting, by the second device, a time domain position of a third resource is: reducing, by the second device, a time domain length of the third resource, and increasing a time domain length of a fourth resource corresponding to the third resource, wherein the fourth resource is used to perform at least one of the following functions: a communication function, a sensing function, or a protection function.

8. The method according to claim 4, wherein after the determining, by the second device, the first information, the method further comprises:
sending, by the second device, third information to a third device, wherein the third device is configured with a third resource, the third resource is a resource that causes interference to the first resource, and the third information indicates the third device to adjust a time domain position of the third resource.

9. The method according to any one of claims 1 to 8, wherein the first information comprises at least one of the following items of the first resource: frequency domain information or time domain information.

10. The method according to claim 9, wherein the frequency domain information comprises at least one of the following items of the first resource: a channel identifier or a frequency band identifier.

11. The method according to claim 9, wherein the time domain information comprises at least one of the following items of the first resource: a time domain position or a time domain format.

12. A communication apparatus, wherein the apparatus comprises a processing module and a transceiver module, wherein
the processing module is configured to determine that a first resource is subject to interference, the communication apparatus is configured with a resource used to perform a communication function and a sensing function, and the first resource is used to perform at least one of the following functions: the communication function or the sensing function; and
the transceiver module is configured to send first information, and the first information indicates that the first resource is subject to interference.

13. The apparatus according to claim 12, wherein the transceiver module is further configured to obtain second information after sending the first information, and the second information indicates the communication apparatus to adjust a time domain position of the first resource.

14. The apparatus according to claim 13, wherein that the communication apparatus adjusts the time domain position of the first resource is: the communication apparatus reduces a time domain length of the first resource and increases a time domain length of a second resource corresponding to the first resource, wherein the second resource is used to perform at least one of the following functions: a communication function, a sensing function, or a protection function.

15. A communication apparatus, wherein the apparatus comprises a processing module and a transceiver module, wherein
the transceiver module is configured to obtain first information, the first information indicates that a first resource is subject to interference, and the first resource is used to perform at least one of the following functions: a communication function or a sensing function; and
the processing module is further configured to determine the first information.

16. The apparatus according to claim 15, wherein the processing module is further configured to: after determining the first information, control the transceiver module to send second information to a first device, and the second information indicates the first device to adjust a time domain position of the first resource.

17. The apparatus according to claim 15, wherein the processing module is further configured to adjust a time domain position of a third resource after determining the first information, the communication apparatus is configured with the third resource, and the third resource is a resource that causes interference to the first resource.

18. The apparatus according to claim 17, wherein that the communication apparatus adjusts the time domain position of the third resource is: the communication apparatus reduces a time domain length of the third resource and increases a time domain length of a fourth resource corresponding to the third resource, wherein the fourth resource is used to perform at least one of the following functions: a communication function, a sensing function, or a protection function.

19. The apparatus according to claim 15, wherein the processing module is further configured to: after determining the first information, control the transceiver module to send third information to a third device, the third device is configured with a third resource, the third resource is a resource that causes interference to the first resource, and the third information indicates the third device to adjust a time domain position of the third resource.

20. The apparatus according to any one of claims 12 to 19, wherein the first information comprises at least one of the following items of the first resource: frequency domain information or time domain information.

21. The apparatus according to claim 20, wherein the frequency domain information comprises at least one of the following items of the first resource: a channel identifier or a frequency band identifier.

22. The apparatus according to claim 20, wherein the time domain information comprises at least one of the following items of the first resource: a time domain position or a time domain format.

23. A communication apparatus, wherein the apparatus comprises a processor, wherein
the processor is configured to perform the method according to any one of claims 1 to 11.

24. A communication apparatus, wherein the apparatus comprises a logic circuit and an input/output interface, wherein
the input/output interface is configured to: obtain code instructions and transmit the code instructions to the logic circuit; and
the logic circuit is configured to run the code instructions to perform the method according to any one of claims 1 to 11.

25. A computer-readable storage medium, wherein the computer-readable storage medium comprises a computer program or instructions, and when the computer program or the instructions is/are run on a computer, the computer is enabled to perform the method according to any one of claims 1 to 11.

26. A computer program product, wherein the computer program product comprises a computer program or instructions, and when the computer program or the instructions is/are run on a computer, the computer is enabled to perform the method according to any one of claims 1 to 11.
